# EUROPÄISCHE PATENTSCHRIFT

(11) **EP 2 311 118 B1**
(45) Veröffentlichungstag und Bekanntmachung des Hinweises auf die Patenterteilung: **14.03.2018**
(21) Anmeldenummer: 10701624.8
(22) Anmeldetag: 22.01.2010
(51) Int. Cl.: H01M 2/10, H01M 10/48, H01M 10/0525, H01M 10/42

(54) **Verfahren zur Herstellung einer Batterie**
Method of production of a battery
Procédé de fabrication d'une batterie

(30) Priorität: 26.01.2009 DE 102009007249
(43) Veröffentlichungstag der Anmeldung: 20.04.2011
(73) Patentinhaber: VARTA Microbattery GmbH, 73479 Ellwangen (DE)
(72) Erfinder: GAUGLER, Christian, 73479 Ellwangen (DE); GROSS, Kuno, 73486 Adelmannsfelden (DE); HAHN, Rainer, 73489 Jagstzell (DE)
(74) Vertreter: Patentanwaltskanzlei Cartagena
(86) Internationale Anmeldenummer: PCT/EP2010/000390
(87) Internationale Veröffentlichungsnummer: WO 2010/084016

(56) Entgegenhaltungen:
- EP-A1- 1 895 610
- EP-A2- 1 309 020

## Beschreibung

Die vorliegende Erfindung betrifft ein Verfahren zur Herstellung einer Batterie, insbesondere einer wiederaufladbaren Batterie, wie sie beispielsweise in Mobiltelefonen und anderen portablen Geräten zum Einsatz kommt.
Derartige Batterien, häufig auch als "Power-Packs" bezeichnet, umfassen in der Regel immer ein Zellpaket aus einer oder mehreren Einzelzellen, die vorzugsweise gestapelt oder gewickelt in einem Zellgehäuse anordnet sind. Weitere Bestandteile sind in der Regel insbesondere elektronische Komponenten wie Schutzschaltungen sowie diverse elektrische Leiter, mit denen das Zellpaket und die elektronischen Komponenten kontaktiert sind. Die Zufuhr oder Entnahme elektrischer Energie erfolgt üblicherweise über vorzugsweise metallische Kontaktflächen, die sich an einer der Außenseiten der Batterie befinden. Solche Kontaktflächen können beispielsweise in ein Kunststoffgehäuse eingearbeitet sein, in dem wiederum das Zellpaket sowie die bereits erwähnten elektronische Komponenten und elektrischen Leiter angeordnet werden können. Verbleibende Hohlräume innerhalb des Gehäuses können problemlos z.B. mit Spritzguss ausgefüllt werden.
Ein entsprechendes Verfahren ist beispielsweise aus der EP 1 309 020 A2 bekannt. Beschrieben wird in dieser ein mehrteiliges System zur Herstellung einer Batterie, Mittels einer Polymerschmelze werden in einer Spritzgussform ein Zellpaket, ein Bauteil enthaltend die äußeren Kontaktflächen der Batterie und ein Halteelement miteinander verbunden.

Aus der EP 1 895 610 A1 ist ein Verfahren zur Herstellung eines Batteriepacks bekannt, bei dem einzelne Komponenten des Packs in eine Spritzgussform eingelegt werden und über eine Polymerschmelze miteinander verbunden werden. Hierbei wird eine elektronische Schutzschaltung in einem ersten Schritt an einem Zellpaket fixiert. Dieses wird in einem zweiten Schritt in eine Spritzgussform eingelegt, gemeinsam mit einem weiteren Bauteil, das die Außenkontakte des herzustellenden Batteriepacks beinhaltet.

Aufgrund der zahlreichen Einzelschritte, die bei der Herstellung einer Batterie mit einem solchen Gehäuse anfallen (Einlegen der diversen Einzelkomponenten wie Zellpaket und elektronische Schaltungen in das Gehäuse sowie das Kontaktieren dieser Komponenten untereinander und mit den in das Gehäuse eingearbeiteten äußeren Kontaktflächen) treten jedoch recht häufig Probleme bei der Fertigung auf. Es wurde daher nach technischen Lösungen gesucht, mit denen sich der Fertigungsprozess vereinfachen und damit auch beschleunigen lässt. Ziel war es, Batterien zu reduzierten Stückkosten bereitzustellen, ohne dass es fertigungsbedingt zu Qualitätseinbußen kommt.

Diese Aufgabe wird gelöst durch das Verfahren mit den Merkmalen des Anspruchs 1. Bevorzugte Ausführungsformen des erfindungsgemäßen Verfahrens finden sich in den abhängigen Ansprüchen 2 bis 5.

Eine gemäß dem Verfahren herstellbare Batterie umfasst mehrere separate Einzelkomponenten, nämlich ein Zellpaket aus mindestens einer Einzelzelle in einem Zellgehäuse, ein elektronisches Bauteil und elektrische Leiter zwischen dem Zellpaket und dem elektronischen Bauteil, die diese miteinander kontaktieren. Des Weiteren umfasst die Batterie ein Spritzgussteil, welches gleichzeitig mehrere Funktionen hat. Zum einen schützt und fixiert es die elektrischen Leiter zwischen dem Zellpaket und dem elektronischen Bauteil, welche im Wesentlichen vollständig in das Spritzgussteil eingebettet sind. Dabei steht es sowohl mit dem Zellpaket als auch mit dem elektronischen Bauteil in formschlüssiger Verbindung und verbindet diese miteinander. Das elektronische Bauteil selbst zeichnet sich dabei dadurch aus, dass in das Bauteil neben mindestens einer elektronischen Sicherheitsschaltung auch die äußeren Kontaktflächen der Batterie integriert sind. Die elektronische Sicherheitsschaltung sowie die äußeren Kontaktflächen können also bei der Herstellung der Batterie in einem Schritt verbaut werden. Sie sind beide Bestandteil des gleichen Bauteils.

Innerhalb der Batterie ist das elektronische Bauteil selbstverständlich stets so angeordnet, dass die Kontaktflächen auf der Außenseite der Batterie zu liegen kommen, so dass dort eine Stromabnahme durch einen externen Verbraucher erfolgen kann.

Das Spritzgussteil kann als bloßes Zwischenstück zwischen dem Zellpaket und dem elektronischen Bauteil ausgebildet sein und diese durch Verklebung miteinander verbinden. Vorzugsweise bildet es aber zusätzlich oder stattdessen ein festes mechanisches Bindeglied zwischen den beiden Komponenten.

So kann das Spritzgussteil einer erfindungsgemäßen Batterie in bevorzugten Ausführungsformen als Rahmen oder als ein Gehäuse ausgebildet sein, der oder das zumindest einen Teil des Zellpakets, insbesondere dessen Ecken und Kanten, umschließt. Gleichzeitig oder alternativ dazu kann es bevorzugt sein, dass das Spritzgussteil der Batterie als Rahmen oder als ein Gehäuse ausgebildet ist, der oder das zumindest einen Teil, insbesondere die Ecken und Kanten, des elektronischen Bauteils umschließt. Sofern beides der Fall ist, bildet das Spritzgussteil einen Rahmen oder ein Gehäuse aus, in dem das Zellpaket und das elektronische Bauteil fest fixiert sind. Insbesondere lassen sich diese beiden Teile dann nicht mehr voneinander trennen, ohne dass das Spritzgussteil beschädigt oder zerstört wird.

In weiteren bevorzugten Ausführungsformen umschliesst das Spritzgussteil nicht nur die Ecken und Kanten des Zellpakets und/oder des elektronischen Bauteils, sondern es umschliesst diese im Wesentlichen vollständig (abgesehen von den äußeren Kontaktflächen der Batterie). Es bildet dann ein echtes Gehäuse aus, das alle Komponenten der Batterie umgibt.

Das elektronische Bauteil besteht im Wesentlichen aus einem gehärteten Kunststoffteil, in das die äußeren Kontaktflächen der Batterie sowie die mindestens eine elektronische Sicherheitsschaltung sowie gegebenenfalls elektrische Leiter zwischen der mindestens einen Schaltung und den äußeren Kontaktflächen und/oder dem Zellpaket eingebettet sind. Die elektronische Sicherheitsschaltung und die äußeren Kontaktflächen der Batterie sind dabei derart in das gehärtete Kunststoffteil integriert, dass sie Bestandteil ein und desselben Bauteils sind und bei der Herstellung der Batterie in einem Schritt verbaut werden können.

Wie bereits eingangs angedeutet wurde, handelt es sich bei der Batterie in bevorzugten Ausführungsformen um eine wiederaufladbare Batterie. Besonders bevorzugt ist die Batterie eine Lithium-Ionen- oder eine Lithium-Polymer-Batterie. Sie weist entsprechend in bevorzugten Ausführungsformen mindestens eine Lithium-interkalierende Elektrode auf.

Die mindestens eine Einzelzelle des Zellpakets ist in der Regel als Elektroden-Separator-Verbund ausgebildet, bei dem auf einem flächigen Separator, insbesondere auf einer Separatorfolie, die Elektroden aufgebracht sind. Innerhalb des Zellpakets können mehrere Einzelzellen z.B. stapelartig angeordnet sein. Wie eingangs bereits erwähnt, ist es jedoch grundsätzlich auch möglich, die Elektroden samt Separator z.B. spiralförmig aufzuwickeln. In beiden Fällen ist es bevorzugt, dass die Einzelzellen zum Schutz vor Feuchtigkeit und sonstigen Umwelteinflüssen von einem wasserdichten Gehäuse umgeben sind. Vorzugsweise werden dünne Folien, insbesondere Verbundfolien wie z.B. Aluminiumverbundfolien (mit einer isolierenden Schicht auf der Innenseite), als Gehäusematerial verwendet. Bei dem Zellgehäuse des Zellpaketes handelt es sich entsprechend bevorzugt um ein Foliengehäuse.

Zur Auf- und Abnahme elektrischer Energie ist die mindestens eine Einzelzelle bevorzugt mit Stromkollektoren versehen, wobei Kollektoren gleicher Polarität gegebenenfalls gebündelt (falls das Zellpaket mehrere Einzelzellen umfasst) und an Ableiter angeschlossen sind, die aus dem Zellgehäuse herausgeführt sind. Diese Ableiter bilden gegebenenfalls auch die elektrischen Leiter zwischen dem Zellpaket und dem elektronischen Bauteil aus oder sind zumindest mit diesen elektrisch leitend verbunden.

Wie bereits angesprochen, können bei der Herstellung der Batterie die mindestens eine elektronische Sicherheitsschaltung und die äußeren Kontaktflächen in einem Schritt verbaut werden. Die Batterie weist folglich eine sehr einfache Konstruktion auf. Dies hat vor allem deutliche Vorteile bei der Fertigung der Batterie, es müssen nämlich weniger Einzelkomponenten miteinander verbunden und fixiert werden.

Bei dem erfindungsgemäßen Verfahren werden ein Zellpaket aus mindestens einer Einzelzelle in einem Zellgehäuse (betreffend mögliche Ausführungsformen des Zellpakets und seiner Komponenten wird auf die obigen Erläuterungen Bezug genommen) und ein elektronisches Bauteil der oben beschrieben Ausführung (mit integrierter elektronischer Schaltung und integrierten äußeren Kontaktflächen der Batterie, ebenfalls wie oben beschrieben) in einer Spritzgussform angeordnet. Anschließend wird der verbleibende freie Raum zwischen den Teilen mit einer flüssigen Kunststoffmasse gefüllt. Diese wird anschließend ausgehärtet (bzw. man lässt die Kunststoffmasse aushärten).

Da im Vergleich zum bekannten Stand der Technik bei diesem Verfahren weniger Einzelteile in die Spritzgussform eingelegt werden müssen, ist das Handling erheblich vereinfacht, was wiederum eine deutliche Verkürzung der Zykluszeiten ermöglicht.

Vor dem Einfüllen der flüssigen Kunststoffmasse in die Spritzgussform werden die in der Spritzgussform angeordneten Einzelteile durch elektrische Leiter miteinander verbunden, soweit erforderlich. Bevorzugt geschieht dies, bevor die Teile in der Spritzgussform angeordnet werden.

Als Kunststoffmasse wird besonders bevorzugt ein thermoplastischer Schmelzkleber verwendet. Als besonders geeignet haben sich Schmelzkleber auf Basis von Polyamid erwiesen.

Vor dem Einfüllen der Kunststoffmasse in die Spritzgussform wird die Kunststoffmasse sowie gegebenenfalls auch die Spritzgussform erwärmt, insbesondere auf eine Temperatur zwischen 150 °C und 280 °C. Besonders bevorzugt sind Temperaturen im Bereich zwischen 190 °C und 230 °C. Entsprechend werden insbesondere auch Schmelzkleber verwendet, die in den genannten Temperaturbereichen verflüssigbar sind.

In der Spritzgussform werden die durch Spritzguss zu verbindenden Teile entsprechend ihrer gewünschten Position in der herzustellenden Batterie angeordnet. Dabei ist insbesondere die Anordnung des elektronischen Bauteils von Bedeutung, da die darin integrierten Kontaktflächen der Batterie beim Gießvorgang natürlich nicht mit flüssiger Kunststoffmasse bedeckt werden sollten. Das elektronische Bauteil wird deshalb in der Spritzgussform vorzugsweise derart angeordnet, dass die Kontaktflächen zumindest teilweise frei von der flüssigen Kunststoffmasse bleiben. Dies geschieht insbesondere dadurch, dass das elektronische Bauteil mit den Kontaktflächen an die Innenwand der Spritzgussform gepresst wird, so dass zwischen den Kontaktflächen und der Oberfläche der Spritzgussform kein Raum bleibt, in den die flüssige Kunststoffmasse eindringen könnte.

Das Zellpaket wird in bevorzugten Ausführungsformen derart angeordnet, dass die flüssige Kunststoffmasse zumindest seine Ecken und Kanten umschließen kann, insbesondere derart, dass ein als Rahmen oder Gehäuse ausgebildetes Spritzgussteil entstehen kann, wie es oben beschrieben wurde.

Dies sowie weitere Merkmale der Erfindung werden im Folgenden noch detailliert anhand der nachfolgenden Beschreibung von bevorzugten Ausführungsformen erläutert. Bei den beschriebenen bevorzugten Ausführungsformen können einzelne Merkmale der Erfindung jeweils für sich oder zu mehreren in Kombination miteinander verwirklicht sein. Die beschriebenen bevorzugten Ausführungsformen dienen lediglich zur Erläuterung und zum besseren Verständnis der Erfindung und sind in keiner Weise einschränkend zu verstehen.

In den Zeichnungen zeigen:
- **Fig. 1**: eine Ausführungsform eines erfindungsgemäß einsetzbaren elektronischen Bauteils mit integrierten äußeren Kontaktflächen und einer integrierten elektronischen Schaltung
- **Fig. 2**: eine bevorzugte Ausführungsform einer gemäß der Erfindung herstellbaren Batterie.

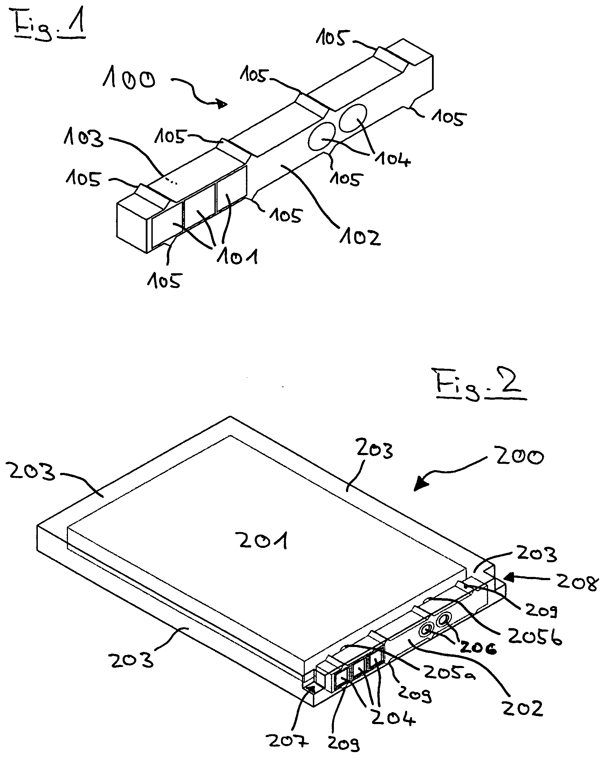

In **Fig. 1** ist eine bevorzugte Ausführungsform eines erfindungsgemäß einsetzbaren elektronischen Bauteils **100** dargestellt. Zu erkennen sind die äußeren Kontaktflächen **101**, die in ein Kunststoffteil aus gehärtetem Kunststoff **102** eingebettet sind. Auf der Rückseite des Kunststoffteils **102** angeordnet oder in dieses eingebettet ist die elektronische Sicherheitsschaltung **103** (nicht dargestellt), die fest mit dem Kunststoffteil verbunden ist. Auf der Rückseite des Kunststoffteils finden sich bevorzugt auch die Kontaktstellen für die elektrischen Leiter (ebenfalls nicht dargestellt), über die die Sicherheitsschaltung **103** und die äußeren Kontaktflächen **101** mit dem Zellpaket einer Batterie verbunden werden können. Die Kontaktierung der Sicherheitsschaltung **103** mit den äußeren Kontaktflächen **101** oder ihre genaue Lage innerhalb des elektronischen Bauteils **100** (oder an diesem) ist dabei nicht erfindungswesentlich, wichtig ist vor allem, dass die Sicherheitsschaltung **103** und die äußeren Kontaktflächen **101** in das elektronische Bauteil **100** integriert sind, beide also Bestandteil ein und desselben Bauteils sind, so dass sie bei der Herstellung einer Batterie in einem Schritt verbaut werden können. Bei den Kontakten **104** handelt es sich um Prüfkontakte, die für die vorliegend beschriebene Erfindung keine Bedeutung haben.

Der Kunststoffkörper **102** des elektronischen Bauteils **100** ist im Wesentlichen als rechteckiges Formteil ausgebildet. An seinen Längsseiten sind insgesamt acht im Wesentlichen dreieckförmige Vorsprünge **105** zu erkennen. Diese dienen als Positionierungshilfen, um das Bauteil **100** in einer Spritzgussform exakt positionieren zu können. Das Anpressen der äußeren Kontaktflächen **101** an die Innenwand der Spritzgussform kann beispielsweise mittels Vakuum erfolgen. Bevorzugt wird das Bauteil **100** in der Spritzgussform jedoch in einer mechanischen Halterung derart fixiert, dass die Kontaktflächen unter Druck an der Innenwand anliegen. Dies kann beispielsweise mittels dünner Stifte erfolgen, die nahe der Innenwand der Spritzgussform angeordnet sind, so dass das elektronische Bauteil **100** zwischen ihnen und der Innenwand eingeklemmt werden kann. Gleichzeitig kann Druck über eine Anpressplatte auf die Kontaktflächen ausgeübt werden.

In **Fig. 2** ist eine gemäß der Erfindung herstellbare Batterie **200** schematisch dargestellt. Zu erkennen ist zum einen das Zellpaket **201**, das in **Fig. 1** dargestellte elektronische Bauteil **202** mit integrierter elektronischer Schaltung (nicht dargestellt) sowie mit den integrierten äußeren Kontaktflächen **204** der Batterie sowie das Spritzgussteil **203**, das mit dem elektronischen Bauteil und dem Zellpaket in formschlüssiger Verbindung steht. Elektrisch verbunden sind das Zellpaket **201** und das elektronische Bauteil **202** über die elektrischen Leiter **205a** und **205b.** Das Spritzgussteil **203** umschließt dabei alle Kanten bzw. alle Seiten und Ecken des Zellpaketes **201** und bildet so eine Art Rahmen, in dem das Zellpaket **201** fixiert ist. Darüber hinaus ist das elektronische Bauteil **202** beinahe vollständig in das Spritzgussteil eingebettet. Das Spritzgussteil **203** bildet auf der Oberfläche des elektronischen Bauteils **202** eine Beschichtung aus, die das elektronische Bauteil **202** im Wesentlichen vollständig umgibt (weshalb es gestrichelt dargestellt ist, es ist im Wesentlichen vollständig in das Spritzgussteil **203** eingebettet). Unbedeckt sind lediglich die äußeren Kontaktflächen **204** sowie die Prüfkontakte **206** (die für die vorliegende Erfindung nicht von Bedeutung sind, was ja bereits erwähnt wurde).

Das Spritzgussteil **203** erfüllt somit mehrere Funktionen. Zum einen füllt es alle freien Zwischenräume zwischen dem Zellpaket **201** und dem elektronischen Bauteil **202** aus und umschließt damit auch die elektrischen Leiter **205a und 205b** zwischen diesen beiden Bauteilen. Weiterhin dient es als strukturverstärkendes Element, das dem Gesamtverbund aus den genannten Einzelteilen mechanische Stabilität gibt und diese zusammenhält. Es bildet zum einen eine Art Rahmen, in dem das Zellpaket **201** fixiert ist und zum anderen - für das elektronische Bauteil **202**, ein Gehäuse, dass dieses im Wesentlichen vollständig umgibt.

Bei den an den Ecken **207** und **208** abgebildeten Einkerbungen handelt es sich um (nicht erfindungswesentliche) Positionierungshilfen, die das Einsetzen der Batterie in einen Verbraucher erleichtern können. Weiterhin dargestellt sind die bereits in Fig. 1 abgebildeten dreieckförmigen Vorsprünge **209.**

Das Spritzgussteil **203** lässt sich, wie oben erwähnt, insbesondere aus Schmelzklebern auf Basis von Polyamid herstellen. Als besonders geeignet hat sich z.B. der Schmelzkleber "Macromelt 6832 S" der Firma Henkel KgaA in Düsseldorf erwiesen.

## Patentansprüche

1. Verfahren zur Herstellung einer Batterie (200), bei dem ein Zellpaket (201) aus mindestens einer Einzelzelle in einem Zellgehäuse und ein elektronisches Bauteil (100, 202), das im Wesentlichen aus einem gehärteten Kunststoffteil (102) besteht, in das eine elektronische Sicherheitsschaltung (103) und äußere Kontaktflächen (101, 204) der Batterie derart integriert und eingebettet sind, dass sie Bestandteil ein und desselben Bauteils sind und bei der Herstellung der Batterie in einem Schritt verbaut werden können, in einer Spritzgussform angeordnet werden und der verbleibende freie Raum mit einer flüssigen Kunststoffmasse gefüllt wird, die anschließend ausgehärtet wird.

2. Verfahren nach Anspruch 1, **dadurch gekennzeichnet, dass** das Zellpaket (201) und das elektronische Bauteil (100, 202) vor dem Anordnen in der Spritzgussform mittels geeigneter elektrischer Leiter (205a, 205b) kontaktiert werden.

3. Verfahren nach Anspruch 1 oder 2, **dadurch gekennzeichnet, dass** als Kunststoffmasse ein thermoplastischer Schmelzkleber verwendet wird, vorzugsweise auf Basis eines Polyamids.

4. Verfahren nach einem der Ansprüche 1 bis 3, **dadurch gekennzeichnet, dass** die Kunststoffmasse und gegebenenfalls auch die Spritzgussform vor dem Befüllen auf eine Temperatur zwischen 150 °C und 280 °C, besonders bevorzugt zwischen 190 °C und 230 °C, erwärmt wird.

5. Verfahren nach einem der Ansprüche 1 bis 4, **dadurch gekennzeichnet, dass** das elektronische Bauteil (100, 202) in der Spritzgussform derart angeordnet wird, dass die Kontaktflächen (101, 204) zumindest teilweise, vorzugsweise vollständig, frei von der flüssigen Kunststoffmasse bleiben.

## Claims

1. Method for producing a battery (200), in which a cell stack (201) comprising at least one single cell in a cell housing and an electronic component (100, 202), which mainly consists of a hardened plastic part (102), in which an electronic protection circuit (103) and outer contact areas (101, 204) of the battery are integrated and embedded in such a way that they constitute part of one and the same component and can be installed in one step during the production of the battery, are arranged in an injection mould and the remaining free space is filled with a liquid plastics compound, which is subsequently cured.

2. Method according to Claim 1, **characterized in that** the cell stack (201) and the electronic component (100, 202) are contacted by means of suitable electrical conductors (205a, 205b) before being arranged in the injection mould.

3. Method according to Claim 1 or 2, **characterized in that** a thermoplastic hotmelt adhesive, preferably based on polyamide, is used as the plastics compound.

4. Method according to one of Claims 1 to 3, **characterized in that** the plastics compound and possibly also the injection mould is/are heated to a temperature between 150°C and 280°C, particularly preferably between 190°C and 230°C, before filling.

5. Method according to one of Claims 1 to 4, **characterized in that** the electronic component (100, 202) is arranged in the injection mould in such a way that the contact areas (101, 204) remain at least partially, preferably completely, free from the liquid plastics compound.

## Revendications

1. Procédé de fabrication d'une batterie (200), avec lequel un paquet de cellules (201) composé d'au moins une cellule individuelle dans un boîtier de cellule et d'un composant électronique (100, 202), qui se compose pour l'essentiel d'une pièce en matière plastique (102) durcie dans laquelle sont intégrés et enrobés un circuit de sécurité électronique (103) et des surfaces de contact externes (101, 204) de la batterie de telle sorte qu'ils sont un élément constitutif d'un seul et même composant et, lors de la fabrication de la batterie en une seule étape, peuvent être montés, disposés dans un moule de moulage par injection et l'espace libre restant rempli d'une masse de matière plastique liquide qui est ensuite durcie.

2. Procédé selon la revendication 1, **caractérisé en ce que** le paquet de cellules (201) et le composant électronique (100, 202) sont mis en contact au moyen de conducteurs électriques (205a, 205b) appropriés avant la disposition dans le moule de moulage par injection.

3. Procédé selon la revendication 1 ou 2, **caractérisé en ce que** la masse de matière plastique utilisée est un adhésif thermofusible thermoplastique, de préférence à base d'un polyamide.

4. Procédé selon l'une des revendications 1 à 3, **caractérisé en ce que** la masse de matière plastique et éventuellement aussi le moule de moulage par injection sont chauffés avant le remplissage à une température entre 150 °C et 280 °C, notamment de préférence entre 190 °C et 230 °C.

5. Procédé selon l'une des revendications 1 à 4, **caractérisé en ce que** le composant électronique (100, 202) est disposé dans le moule de moulage par injection de telle sorte que les surfaces de contact (101, 204) restent au moins partiellement, de préférence entièrement exemptes de la masse de matière plastique liquide.
